# EUROPEAN PATENT SPECIFICATION

(11) **EP 2 660 437 B1**
(45) Date of publication and mention of the grant of the patent: **24.02.2016**
(21) Application number: 11854191.1
(22) Date of filing: 07.09.2011
(51) Int. Cl.: F01N 3/36, F01N 3/08, F01N 3/18

(54) **FAULT DIAGNOSIS DEVICE FOR REDUCING AGENT SUPPLY DEVICE, AND REDUCING AGENT SUPPLY DEVICE**
FEHLERDIAGNOSEVORRICHTUNG FÜR EINE VORRICHTUNG ZUR AUSGABE EINES REDUKTIONSMITTELS UND VORRICHTUNG ZUR AUSGABE EINES REDUKTIONSMITTELS
DISPOSITIF DE DIAGNOSTIC DE DÉFAILLANCE POUR DISPOSITIF D'ALIMENTATION EN AGENT RÉDUCTEUR, ET DISPOSITIF D'ALIMENTATION EN AGENT RÉDUCTEUR

(30) Priority: 28.12.2010 JP 2010294095
(43) Date of publication of application: 06.11.2013
(73) Proprietor: Bosch Corporation, Tokyo 150-8360 (JP)
(72) Inventor: NAGATA Masayasu, Higashimatsuyama-shi Saitama 355-8603 (JP)
(74) Representative: DREISS Patentanwälte PartG mbB
(86) International application number: PCT/JP2011/070321
(87) International publication number: WO 2012/090555

(56) References cited:
- EP-A1- 2 034 147
- EP-A1- 2 128 395
- JP-A- 2008 038 728
- JP-A- 2008 082 201
- JP-A- 2008 180 193
- JP-A- 2008 202 469

## Description

### Technical Field

The present invention relates to a reducing agent supply apparatus abnormality diagnosis unit for performing abnormality diagnosis of a reducing agent supply apparatus that injects in an exhaust pipe reducing agent for purifying exhaust gas, and also relates to a reducing agent supply apparatus including the abnormality diagnosis unit.

### Background Art

EP 2 128 395 A1 discloses a clogging determining device and method. Conventionally, as one aspect of an exhaust gas purification apparatus for removing nitrogen oxides (hereinafter referred to as "NOx") contained in exhaust gas from an internal-combustion engine included in a vehicle or the like, an apparatus is practically used which includes: an NOx purification catalyst, provided in the middle of an exhaust passage, for speeding up reduction reaction between NOx and reducing agent; and a reducing agent supply apparatus that injects liquid reducing agent, such as urea aqueous solution and unburnt fuel, upstream of the NOx purification catalyst.

Conventionally, as one aspect of an exhaust gas purification apparatus for removing nitrogen oxides (hereinafter referred to as "NOₓ") contained in exhaust gas from an internal-combustion engine included in a vehicle or the like, an apparatus is practically used which includes: an NOₓ purification catalyst, provided in the middle of an exhaust passage, for speeding up reduction reaction between NOₓ and reducing agent; and a reducing agent supply apparatus that injects liquid reducing agent, such as urea aqueous solution and unburnt fuel, upstream of the NOₓ purification catalyst. The reducing agent supply apparatus used in such an exhaust gas purification apparatus includes: a storage tank for storing liquid reducing agent; a pump for sucking up and pumping reducing agent stored in the storage tank; and a reducing agent injection valve for injecting the pumped reducing agent in the exhaust pipe.

In this configuration, when the injection amount of reducing agent is too large with respect to the amount of NOₓ, reducing agent components, such as ammonia and unburnt fuel component, flow out to the downstream side of the NOₓ purification catalyst. On the other hand, when the injection amount of reducing agent is too small with respect to the amount of NOₓ, NOₓ purification rate decreases to cause NOₓ to flow out to the downstream side of the NOₓ purification catalyst. Thus, in order to inject just enough reducing agent with respect to the amount of nitrogen oxides contained in exhaust gas, the reducing agent supply apparatus is configured to determine an instructed injection amount of reducing agent based on the operating condition of the internal-combustion engine to perform injection control.

In such a reducing agent supply apparatus, crystallization of reducing agent, invasion of foreign material from the exhaust pipe side into the reducing agent supply apparatus through an injection nozzle of the reducing agent injection valve or the like may cause a reducing agent passage and the injection nozzle connecting the pump to the reducing agent injection valve to be partially or completely blocked, causing the actual reducing agent injection amount to be less than the instructed injection amount. In order to solve this problem, an apparatus has been proposed that is configured so as to determine clogging of a reducing agent supply chain using the pressure value of reducing agent supplied to the reducing agent injection valve. Specifically, an apparatus has been disclosed that determines whether or not clogging has occurred in the reducing agent supply chain based on the relation between the amount of reducing agent injected with the pump stopped and the amount of decrease in the pressure of reducing agent (see Patent Literature 1).

### Citation List

### Patent Literature

- Patent Literature 1:: JP-A-2008-2426 (full text, whole drawings)

### Summary of Invention

### Technical Problem

However, the apparatus described in Patent Literature 1 needs to stop the pump while performing abnormality diagnosis. So, in order to perform abnormality diagnosis, the apparatus needs to interrupt the usual injection control of reducing agent or needs to perform abnormality diagnosis only when exhaust gas purification control is not performed, which imposes a limitation on when to perform abnormality diagnosis.

Furthermore, the reason of difference between the actual reducing agent injection amount and the instructed injection amount is not only the clogging of the reducing agent supply chain, but may be deterioration or damage of a component of the reducing agent supply apparatus, electrical failure or the like, so a diagnosis method for reliably detecting the occurrence of abnormality as described above is desired.

The present inventors found that the above-described problem can be solved by performing abnormality diagnosis of the reducing agent supply apparatus based on the duty ratio of the reducing agent injection valve and the duty ratio of the pump while usual injection control of reducing agent is being performed, and thus completed the invention.

That is, it is an object of the present invention to provide a reducing agent supply apparatus abnormality diagnosis unit that can reduce the limitation on when to perform abnormality diagnosis and can reliably detect an abnormality of a reducing agent supply apparatus and to provide a reducing agent supply apparatus.

### Solution to Problem

According to the invention, a reducing agent supply apparatus abnormality diagnosis unit for performing abnormality diagnosis of a reducing agent supply apparatus is provided, the reducing agent supply apparatus including: a storage tank for storing liquid reducing agent; a pump for pumping the reducing agent; a reducing agent injection valve for injecting the reducing agent pumped by the pump in an exhaust pipe of an internal-combustion engine; a reducing agent passage connecting the pump to the reducing agent injection valve; and a pressure sensor for detecting pressure in the reducing agent passage, wherein the reducing agent supply apparatus abnormality diagnosis unit includes: a reducing agent injection valve controller for determining an energization on/off duty ratio according to an instructed injection amount of the reducing agent to issue an instruction for driving the reducing agent injection valve; a pump controller for determining an energization on/off duty ratio to issue an instruction for driving the pump so that the pressure in the reducing agent passage is maintained at a predetermined system pressure, based on the difference between the detected pressure in the reducing agent passage and the system pressure; and an abnormality determiner for performing abnormality determination of the reducing agent supply apparatus based on the duty ratio of the reducing agent injection valve and the duty ratio of the pump in a predetermined period. This reducing agent supply apparatus abnormality diagnosis unit can solve the above-described problem.

Specifically, when the pump is drive-controlled so that the pressure in the reducing agent passage is maintained at a system pressure, the reducing agent supply apparatus abnormality diagnosis unit exploits the fact that there is a correlation between the change in the reducing agent injection valve duty ratio and the change in the pump duty ratio to perform abnormality diagnosis based on the duty ratios. This eliminates the need for interrupting usual reducing agent injection control and enables reliable detection of an abnormality of the reducing agent supply apparatus.

Furthermore, in configuring the reducing agent supply apparatus abnormality diagnosis unit of the invention, the abnormality determiner preferably performs abnormality determination by determining whether or not the instruction for driving the pump with an output power assumed from the integration of the reducing agent injection valve duty ratio during the predetermined period has been issued.

The reducing agent supply apparatus abnormality diagnosis unit of the invention performs abnormality diagnosis using the integration of the reducing agent injection valve duty ratio. So, even when the sensitivity of the pump duty ratio to the reducing agent injection valve duty ratio reduces temporarily, the possibility of erroneous determination as a result of abnormality diagnosis may be reduced.

Furthermore, in the reducing agent supply apparatus abnormality diagnosis unit, the abnormality determiner preferably performs abnormality determination based on the reducing agent injection valve duty ratio and the pump duty ratio when the reducing agent injection valve duty ratio is within a range in which the change in the pump duty ratio is in proportion to the change in the reducing agent injection valve duty ratio.

In the reducing agent supply apparatus abnormality diagnosis unit of the invention, the range of the reducing agent injection valve duty ratio and the pump duty ratio, based on which the determination is performed, is limited to a predetermined range so that abnormality diagnosis is performed based on the duty ratios when the sensitivity of the pump duty ratio to the reducing agent injection valve duty ratio is relatively stable, which can improve the precision of the diagnosis.

Furthermore, in configuring the reducing agent supply apparatus abnormality diagnosis unit of the invention, the abnormality determiner preferably performs the abnormality determination such that the predetermined period is a period from when the integration of the reducing agent injection valve duty ratio is started to when the calculated integration reaches a predetermined determination start value.

In the reducing agent supply apparatus abnormality diagnosis unit of the invention, abnormality diagnosis is performed based on the reducing agent injection valve duty ratio and the pump duty ratio in a period in which the integration of the reducing agent injection valve duty ratio reaches a predetermined determination start value so that abnormality diagnosis is performed when the instructed injection amount is equal to or more than a predetermined amount, which causes the variation depending on whether or not an abnormality has occurred to be seen clearly, allowing the possibility of erroneous determination to be reduced.

Furthermore, in the reducing agent supply apparatus abnormality diagnosis unit of the invention, the abnormality determiner preferably performs abnormality determination by setting as a reference duty ratio the pump duty ratio when the reducing agent injection valve duty ratio is zero, then comparing the ratio of the integration of the reducing agent injection valve duty ratio during the predetermined period to the integration of the difference between the pump duty ratio and the reference duty ratio during the predetermined period, with a determination threshold.

The reducing agent supply apparatus abnormality diagnosis unit of the invention performs abnormality diagnosis using the ratio of the integration of the reducing agent injection valve duty ratio during the predetermined period to the integration of the change in the pump duty ratio during the predetermined period, which can facilitate the detection of a condition in which the sensitivity of the pump duty ratio to the change in the reducing agent injection valve duty ratio is abnormal, improving the reliability of the diagnosis.

Furthermore, in configuring the reducing agent supply apparatus abnormality diagnosis unit of the invention, the abnormality determiner preferably performs abnormality determination by setting as a reference duty ratio the pump duty ratio when the reducing agent injection valve duty ratio is zero, then comparing the integration of the product of the reducing agent injection valve duty ratio and the difference between the pump duty ratio and the reference duty ratio during the predetermined period, with a determination threshold assumed from the integration of the reducing agent injection valve duty ratio during the predetermined period.

The reducing agent supply apparatus abnormality diagnosis unit performs abnormality diagnosis using the integration of the product of the reducing agent injection valve duty ratio during the predetermined period and the change in the pump duty ratio, which causes the variation depending on whether or not an abnormality has occurred to be seen clearly, facilitating the determination whether or not an abnormality has occurred.

Furthermore, in configuring the reducing agent supply apparatus abnormality diagnosis unit of the invention, the abnormality determiner preferably performs abnormality determination by setting as a reference duty ratio the pump duty ratio when the reducing agent injection valve duty ratio is zero, then comparing the integration of the difference between the pump duty ratio and the reference duty ratio during the predetermined period, with a determination threshold assumed from the integration of the reducing agent injection valve duty ratio during the predetermined period.

The reducing agent supply apparatus abnormality diagnosis unit can perform abnormality diagnosis more easily, using the integration of the pump duty ratio during the predetermined period, than performing abnormality diagnosis using the integration of the product of the reducing agent injection valve duty ratio and the change in the pump duty ratio.

Furthermore, in configuring the reducing agent supply apparatus abnormality diagnosis unit of the invention, it is preferable that an upper threshold and a lower threshold are set as a determination threshold, and the abnormality determiner uses the upper threshold and the lower threshold to separately determine an abnormality of excessive injection amount condition and an abnormality of insufficient injection amount condition.

Using the upper threshold and the lower threshold, the reducing agent supply apparatus abnormality diagnosis unit can separately determine an abnormality of excessive injection amount condition and an abnormality of insufficient injection amount condition, enabling prompting an action depending on the abnormality condition after the abnormality is detected.

Furthermore, another aspect of the invention is a reducing agent supply apparatus including any reducing agent supply apparatus abnormality diagnosis unit described above.

Namely, the reducing agent supply apparatus of the invention includes an abnormality diagnosis unit that eliminates the need for interrupting usual reducing agent injection control and enables reliable detection of an abnormality of the reducing agent supply apparatus, so the reducing agent supply apparatus can supply just enough reducing agent necessary for NOₓ purification and, when an abnormality occurs, can quickly detect the abnormality.

Note that, in the description, the energization on/off duty ratio refers to the ratio of the energization ON time to the unit time, unless otherwise stated.

### Brief Description of Drawings

[Fig. 1] Fig. 1 is an overall diagram showing a configuration example of an exhaust gas purification apparatus including a reducing agent supply apparatus in accordance with a first embodiment of the invention.
[Fig. 2] Fig. 2 is a block diagram showing a configuration example of a reducing agent injection valve abnormality diagnosis unit in accordance with the first embodiment of the invention.
[Fig. 3] Fig. 3 is a diagram showing the change in the pressure in a (second) reducing agent passage and the change in pump duty ratio when reducing agent injection valve duty ratio is changed.
[Fig. 4] Fig. 4 is a diagram for describing an overview of an abnormality diagnosis method of the reducing agent supply apparatus in accordance with the first embodiment of the invention.
[Fig. 5] Fig. 5 is a flowchart showing a specific example for implementing the abnormality diagnosis method of the reducing agent supply apparatus in accordance with the first embodiment of the invention.
[Fig. 6] Fig. 6 is a flowchart showing a specific example of time integration calculation method.
[Fig. 7] Fig. 7 is a flowchart showing a specific example for abnormality determination in accordance with the first embodiment of the invention.
[Fig. 8] Fig. 8 is a diagram for describing an overview of an abnormality diagnosis method of a reducing agent supply apparatus in accordance with a second embodiment of the invention.
[Fig. 9] Fig. 9 is a flowchart showing a specific example for implementing the abnormality diagnosis method of the reducing agent supply apparatus in accordance with the second embodiment of the invention.
[Fig. 10] Fig. 10 is a flowchart showing a specific example for abnormality determination in accordance with the second embodiment of the invention.

### Description of Embodiments

Embodiments of a reducing agent supply apparatus abnormality diagnosis unit and a reducing agent supply apparatus in accordance with the invention are specifically described below with reference to the drawings as appropriate. However, the embodiments described below are intended to show only an aspect of the invention and not intended to limit the invention, so may be appropriately modified within the scope of the invention.

Note that, through the drawings, like numerals denote like components, and duplicative descriptions will be appropriately omitted.

### [First embodiment]

### 1. Overall configuration of exhaust gas purification apparatus

First, an overview of an overall configuration of an exhaust gas purification apparatus including a reducing agent supply apparatus is described.

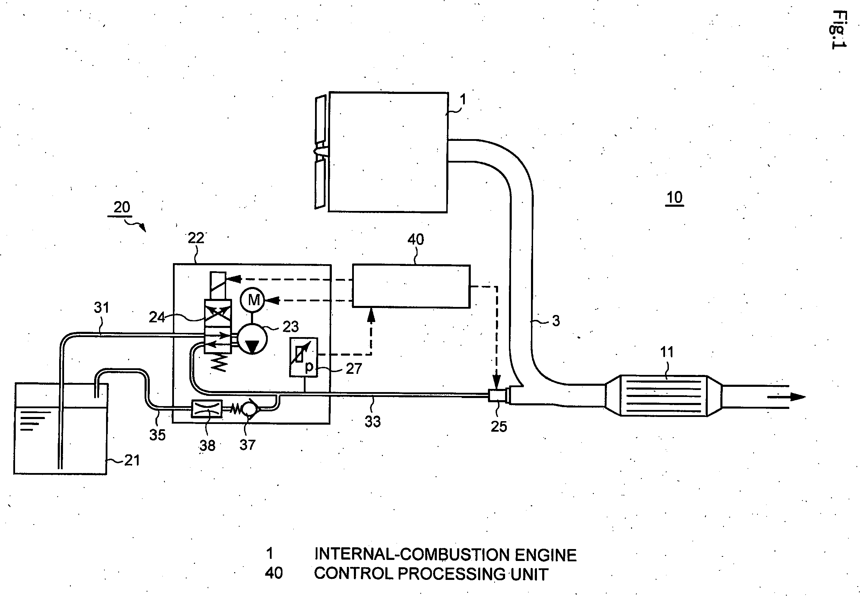

Fig. 1 shows an example configuration of an exhaust gas purification apparatus 10. This exhaust gas purification apparatus 10 is an exhaust gas purification apparatus that purifies NOₓ contained in exhaust gas from an internal-combustion engine 1 included in a vehicle or the like, in NOₓ purification catalyst 11, using reducing agent.

The exhaust gas purification apparatus 10 includes as main components: the NOₓ purification catalyst 11 provided in the middle of an exhaust pipe 3 connected to an exhausted system of the internal-combustion engine 1; a reducing agent supply apparatus 20 that supplies reducing agent by injection in the exhaust pipe 3 upstream of the NOₓ purification catalyst 11; and a control processing unit 40 for controlling the operation of the reducing agent supply apparatus 20.

The NOₓ purification catalyst 11 is capable of speeding up a reaction between reducing agent injected in the exhaust pipe 3 (or reducing component produced from the reducing agent) and NOₓ contained in exhaust gas. As an NOₓ purification catalyst 11, an NOₓ selective reduction catalyst or an NOₓ adsorber catalyst is used.

NOₓ selective reduction catalyst is catalyst capable of adsorbing reducing agent and using the reducing agent to selectively purify NOₓ contained in exhaust gas flowing into the catalyst. In using the NOₓ selective reduction catalyst, urea aqueous solution or unburnt fuel is used as reducing agent. When urea aqueous solution is used as reducing agent, urea in urea aqueous solution is decomposed to produce ammonia (NH₃) that reacts with NOₓ, which decomposes the NOₓ into nitrogen (N₂) and water (H₂O). Or when unburnt fuel is used as reducing agent, carbon hydride (HC) in unburnt fuel reacts with NOₓ, which decomposes the NOₓ into nitrogen (N₂), carbon dioxide (CO₂) and water (H₂O).

NOₓ adsorber catalyst is catalyst capable of adsorbing NOₓ in a state of exhaust gas flowing into catalyst having a lean air-fuel ratio (i.e., in fuel-lean state), and, when the air-fuel ratio is switched to a rich state, discharging NOₓ and using hydrocarbon (HC) in exhaust gas to purify the NOₓ. NOₓ reacting with hydrocarbon (HC) is decomposed into nitrogen (N₂), carbon dioxide (CO₂) and water (H₂O). In using the NOₓ adsorber catalyst, in order to change the air-fuel ratio of exhaust gas into a rich state, unburnt fuel as reducing agent is supplied by injection in the exhaust pipe 3.

### 2. Reducing agent supply apparatus

Next, the configuration of the reducing agent supply apparatus 20 is described in detail.

The reducing agent supply apparatus 20 includes: a storage tank 21 for storing liquid reducing agent; a pump unit 22 including a pump 23 for pumping reducing agent; and a reducing agent injection valve 25 for injecting in the exhaust pipe 3 the reducing agent pumped by the pump 23. Among them, the pump 23 and the reducing agent injection valve 25 are drive-controlled by the control processing unit 40.

The storage tank 21 is connected to the pump 23 by a first reducing agent passage 31. The pump 23 is connected to the reducing agent injection valve 25 by a second reducing agent passage 33. The second reducing agent passage 33 is connected with a return passage 35 with the other end connected to the storage tank 21. The return passage 35 is provided with a relief valve 37 and an orifice 38 in this order from the second reducing agent passage 33 side. Furthermore, the second reducing agent passage 33 is provided with a pressure sensor 27 for detecting a pressure Pu in the second reducing agent passage 33. However, the pressure sensor 27 only needs to be able to detect pressure of reducing agent supplied to the reducing agent injection valve 25, and does not need to be directly provided on the second reducing agent passage 33.

For the reducing agent injection valve 25, an electromagnetic valve is used in which the open/close of the valve is switched by energizing/non-energizing the valve. The reducing agent injection valve 25 is configured so that an actual injection amount Qact is adjusted by adjusting an energization on/off duty ratio per unit time DV_duty (hereinafter simply referred to as "injection valve duty ratio") depending on an instructed injection amount Qtgt determined by calculation.

For the pump 23, an electric pump is used in which a discharge amount Vpump is adjusted by adjusting an energization on/off duty ratio per unit time Pump_duty (hereinafter simply referred to as "pump duty ratio"). The pump 23 is feedback-controlled so that the pressure Pu in the second reducing agent passage 33 is maintained at a preset system pressure Ptgt (e.g., 0.9 MPa). The pump duty ratio Pump_duty is determined based on the difference ΔP between the pressure Pu detected by the pressure sensor 27 and the system pressure Ptgt.

Furthermore, the pump unit 22 is provided with a reverting valve 24 for changing the flowing direction of reducing agent pumped by the pump 23. The reverting valve 24 is, for example, an electromagnetic changeover valve driven by the control processing unit 40. In the embodiment, when the reverting valve 24 is energized, the inlet of the pump 23 is connected to the first reducing agent passage 31, and the outlet of the pump 23 is connected to the second reducing agent passage 33; and when the reverting valve 24 is not energized, the outlet of the pump 23 is connected to the first reducing agent passage 31, and the inlet of the pump 23 is connected to the second reducing agent passage 33.

Then, in controlling the reducing agent injection in the exhaust pipe 3, the energization to the reverting valve 24 is stopped, and the passage is switched so that reducing agent flows from the storage tank 21 side to the reducing agent injection valve 25 side. On the other hand, in performing purge process of collecting reducing agent into the storage tank 21, the reverting valve 24 is energized and the passage is switched so that reducing agent flows from the reducing agent injection valve 25 side to the storage tank 21 side. Alternatively, the purge process may be performed by reversing the direction of rotation of the pump 23 without the reverting valve 24.

The relief valve 37 is a one-way valve for blocking the flow of reducing agent from the storage tank 21 side to the second reducing agent passage 33 side, and is configured to open when the pressure Pu in the second reducing agent passage 33 exceeds the valve opening pressure of the relief valve 37. Furthermore, in the purge process of collecting reducing agent from the reducing agent injection valve 25 and the second reducing agent passage 33, the relief valve 37 becomes closed in response to depressurization of the inside of the second reducing agent passage 33. The orifice 38 provided downstream of the relief valve 37 is capable of preventing the pressure in the second reducing agent passage 33 from pulsating too much in response to opening/closing of the relief valve 37.

### 3. Control processing unit (Abnormality diagnosis unit) (1) Overall configuration

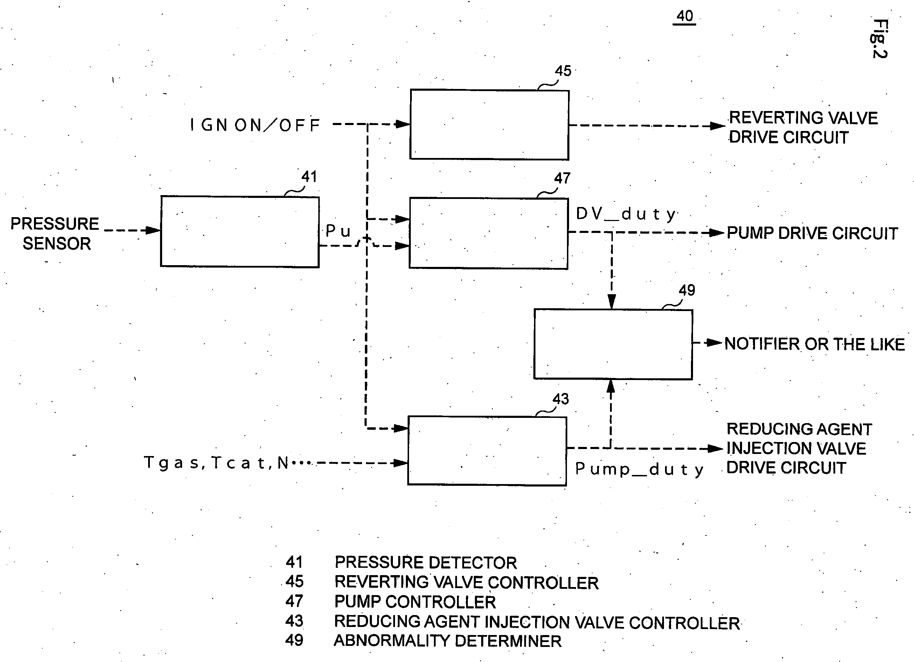

Fig. 2 is a functional block diagram showing a part of the configuration of the control processing unit 40 included in the reducing agent supply apparatus 20 of the embodiment, relating to operation control and abnormality diagnosis of the reducing agent supply apparatus 20. The control processing unit 40 can serve as an abnormality diagnosis unit of the reducing agent supply apparatus 20 in accordance with the invention.

The control processing unit 40 is based on a well known microcomputer and includes as main components a pressure detector 41, a reducing agent injection valve controller 43, a reverting valve controller 45, a pump controller 47 and an abnormality determiner 49. Specifically, these components are implemented by execution of a program by the microcomputer.

In addition, the control processing unit 40 includes a memory device not shown, such as a random access memory (RAM) and a read only memory (ROM), and a drive circuit and the like not shown for energizing the pump 23, the reverting valve 24 and the reducing agent injection valve 25. Furthermore, sensor signals, including a sensor signal of the pressure sensor 27, are input to the control processing unit 40 from various sensors provided in the reducing agent supply apparatus 20, internal-combustion engine 1 and the like.

### (2) Pressure detector

Among them, the pressure detector 41 reads a sensor signal of the pressure sensor 27 to detect the pressure Pu in the second reducing agent passage 33.

### (3) Reducing agent injection valve controller

When the internal-combustion engine 1 is operating, the reducing agent injection valve controller 43 calculates an instructed reducing agent injection amount Qu based on a exhaust gas temperature Tgas, a catalyst temperature Tcat, an NOₓ concentration N downstream of the NOₓ purification catalyst 11, even information on operation state of the internal-combustion engine 1 and the like, then determines the injection valve duty ratio DV_duty in response to the instructed injection amount Qu, and then issues an instruction to the drive circuit of the reducing agent injection valve 25. That is, the larger the instructed injection amount Qu is, the larger the injection valve duty ratio DV_duty is.

On the other hand, when the internal-combustion engine 1 is stopped, the reducing agent injection valve controller 43, in order to perform the purge process, issues an instruction to the drive circuit of the reducing agent injection valve 25 so that the reducing agent injection valve 25 is kept open.

### (4) Reverting valve controller

When the internal-combustion engine 1 is operating, the reverting valve controller 45 stops energizing the reverting valve 24 and switches the passage so that reducing agent flows from the storage tank 21 side to the reducing agent injection valve 25 side. On the other hand, when the internal-combustion engine 1 is stopped, the reverting valve controller 45 energizes the reverting valve 24 to perform the purge process and switches the passage so that reducing agent flows from the reducing agent injection valve 25 side to the storage tank 21 side.

### (5) Pump controller

When the internal-combustion engine 1 is operating, the pump controller 47 determines the pump duty ratio Pump_duty based on the difference ΔP between the detected pressure Pu in the second reducing agent passage 33 and the preset system pressure Ptgt and issues an instruction to the drive circuit of the pump 23 so that the pressure so that the pressure Pu becomes equal to the system pressure Ptgt. The larger the actual reducing agent injection amount Qact is, the more likely to decrease the pressure Pu in the second reducing agent passage 33 is, so the pump duty ratio Pump_duty is relatively large. On the other hand, the smaller the actual reducing agent injection amount Qact is, the more unlikely to decrease the pressure Pu in the second reducing agent passage 33 is, so the pump duty ratio Pump_duty is relatively small.

Particularly, the reducing agent supply apparatus 20 of the embodiment is configured so that the pump 23 continues to be driven even when the reducing agent injection amount Qact is zero, and pumped reducing agent flows in the return passage 35 and circulates to the storage tank 21. Specifically, the reducing agent supply apparatus 20 of the embodiment is configured so that, basically, with respect to the pump duty ratio Pump_duty when the reducing agent injection amount Qu is zero (hereinafter referred to as reference duty ratio Pump_duty_default) as the minimum value, the larger the injection valve duty ratio DV_duty is, the larger the pump duty ratio Pump_duty is.

Furthermore, when the internal-combustion engine 1 is stopped, the pump controller 47 issues an instruction to the drive circuit of the pump 23 so that the pump 23 is drive-controlled at a predetermined pump duty ratio Pump_duty_A for a predetermined time after an ignition switch is turned off.

### (6) Abnormality determiner

The abnormality determiner 49 performs a processing for determining whether or not an abnormality has occurred in the reducing agent supply apparatus 20. The abnormality determiner 49 is configured to determine whether or not an abnormality has occurred in the reducing agent supply apparatus 20, based on the injection valve duty ratio DV_duty and the pump duty ratio Pump_duty. Particularly, in the embodiment, the abnormality determiner 49 is configured to determine whether or not an abnormality has occurred in the reducing agent supply apparatus 20, using a time integration Σ(dv_duty x Δpump_duty) of the product of the injection valve duty ratio DV_duty and the difference Δpump_duty between the pump duty ratio Pump_duty and the reference duty Pump_duty_default.

### (6-1) Relation between injection valve duty ratio and pump duty ratio

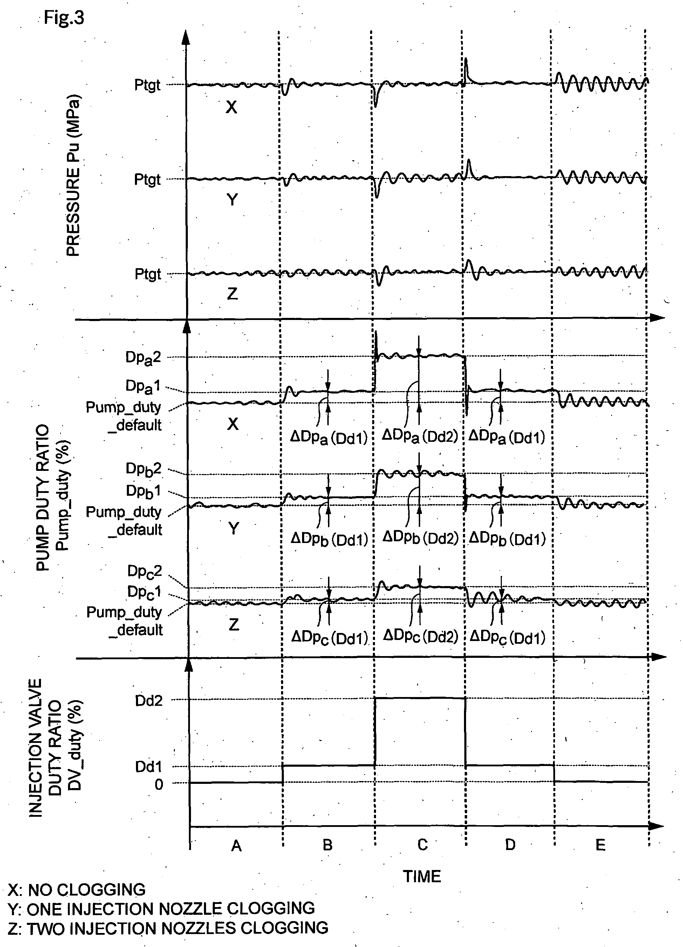

Here, the changes in the pressure Pu in the second reducing agent passage 33 and in the pump duty ratio Pump_duty versus the change in the injection valve duty ratio DV_duty are shown in Fig. 3. Fig. 3 shows the changes in various values when the injection valve duty ratio DV_duty is caused to change such that 0 → Dd1 → Dd2 → Dd1 → 0 (Dd2 > Dd1 > 0) for the purpose of illustrating, when the reducing agent injection valve 25 of the reducing agent supply apparatus 20 has three injection nozzles, the difference among the various values with respect to the difference in the extent of clogging of the injection nozzles of the reducing agent injection valve 25.

Note that the pressure Pu and the pump duty ratio Pump_duty pulsate because the pressure Pu in the second reducing agent passage 33 pulsates along to the discharge of reducing agent by the pump 23, in response to which the pump duty ratio Pump_duty increases and decreases.

First, in the period A in which the injection valve duty ratio DV_duty is set to 0, all of the reducing agent discharged by the pump 23 is returned to the storage tank 21 through the return passage 35, so the pump duty ratio Pump_duty varies with respect to the reference duty ratio Pump_duty_default as center, irrespective of the extent of clogging of the reducing agent injection valve 25.

In the next period B in which the injection valve duty ratio DV_duty is set to Dd1, reducing agent injection is started by the reducing agent injection valve 25, so the pressure Pu in the second reducing agent passage 33 temporarily decreases. At this time, even when the reducing agent injection valve 25 is opened in the same way, the larger the extent of clogging of the injection nozzles is, the smaller the rate of decrease in the pressure Pu is. So, the larger the extent of clogging of the injection nozzles is, the smaller the rate of increase in the pump duty ratio Pump_duty immediately after the injection valve duty ratio DV_duty is changed to Dd1 is.

Subsequently, in the period B, the pump duty ratio Pump_duty is maintained at a value larger than the reference duty ratio Pump_duty_default, which maintains the pressure Pu at the system pressure Ptgt. However, the larger the extent of clogging of the injection nozzles is, the smaller the rate of decrease in the pressure Pu is, so the larger the extent of clogging of the injection nozzles is, the smaller the pump duty ratio Pump_duty in the period B is (ΔDpc(Dd1) < ΔDpb(Dd1) < ΔDpa(Dd1)).

In the next period C in which the injection valve duty ratio DV_duty is set to Dd2, the amount of reducing agent injection by the reducing agent injection valve 25 increases, so the pressure Pu and the pump duty ratio Pump_duty vary depending on the extent of clogging of the injection nozzles, as with the period B. Specifically, the larger the extent of clogging of the injection nozzles is, the smaller the rate of decrease in the pressure Pu immediately after the injection valve duty ratio DV_duty is changed to Dd2 and the rate of increase in the pump duty ratio Pump_duty are, and furthermore, subsequently, in the period C, the larger the extent of clogging of the injection nozzles is, the smaller the pump duty ratio Pump_duty is (ΔDpc(Dd2) < ΔDpb(Dd2) < ΔDpa(Dd2)).

In the next period D in which the injection valve duty ratio DV_duty is set to Dd1, the amount of reducing agent injection by the reducing agent injection valve 25 decreases, so the pressure Pu in the second reducing agent passage 33 temporarily increases. At this time, even when the reducing agent injection valve 25 is opened in the same way, the larger the extent of clogging of the injection nozzles is, the smaller the rate of increase in the pressure Pu is. So, the larger the extent of clogging of the injection nozzles is, the smaller the rate of decrease in the pump duty ratio Pump_duty immediately after the injection valve duty ratio DV_duty is changed to Dd1 is. Subsequently, in the period D, the pump duty ratio Pump_duty is maintained at a value similar to that in the period B, and the larger the extent of clogging of the injection nozzles is, the smaller the pump duty ratio Pump_duty is (ΔDpc(Dd1) < ΔDpb(Dd1) < ΔDpa(Dd1)).

Similarly, in the next period E in which the injection valve duty ratio DV_duty is set to 0, the larger the extent of clogging of the injection nozzles is, the smaller the rate of decrease in the pressure Pu immediately after the injection valve duty ratio DV_duty is changed to 0 and the rate of decrease in the pump duty ratio Pump_duty are. However, subsequently, in the period E, reducing agent injection is not performed, so the pump duty ratio Pump_duty again varies with respect to the reference duty ratio Pump_duty_default as center, irrespective of the extent of clogging of the reducing agent injection valve 25.

As seen from the above, even when the reducing agent injection valve 25 is drive-controlled with the same injection valve duty ratio DV_duty, the pump duty ratio Pump_duty varies depending on the extent of clogging of the injection nozzles. In other words, even when the reducing agent injection valve 25 is drive-controlled with the same injection valve duty ratio DV_duty, the pump duty ratio Pump_duty when the injection amount of the reducing agent supply apparatus 20 is excessive or insufficient may be different from the pump duty ratio Pump_duty in normal state.

The abnormality determiner 49 attempts to detect an abnormality occurring in the reducing agent supply apparatus 20 by determining whether or not the relation between the injection valve duty ratio DV_duty and the pump duty ratio Pump_duty is normal.

The rate of change in the pressure Pu immediately after the injection valve duty ratio DV_duty is changed also varies depending on the extent of clogging of the injection nozzles, but, as time elapses after that, the pressure Pu returns to the system pressure Ptgt. On the other hand, even after the injection valve duty ratio DV_duty is changed, the pump duty ratio Pump_duty still varies depending on the extent of clogging of the injection nozzles. Due to this, in the embodiment, the pump duty ratio Pump_duty is used that is more likely to vary significantly when integrated.

### (6-2) Specific example of abnormality diagnosis method

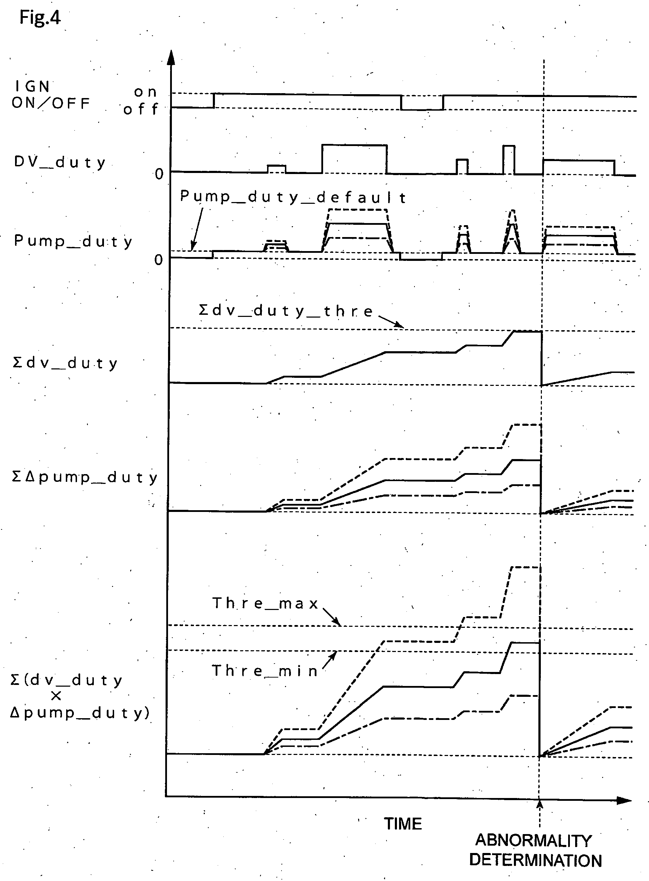

Next, an overview of a method for diagnosing an abnormality of the reducing agent supply apparatus 20 implemented by the abnormality determiner 49 based on the relation between the injection valve duty ratio DV_duty and the pump duty ratio Pump_duty is given with reference to a time chart shown in Fig. 4.

Fig. 4 shows the transition of the on/off of the ignition switch, the injection valve duty ratio DV_duty, the pump duty ratio Pump_duty, the time-integration Σdv_duty of the injection valve duty ratio DV_duty, the time-integration ΣΔpump_duty of the difference of pump duty ratio Δpump_duty and the time integration Σ(dv_duty x Δpump_duty) of the product of the injection valve duty ratio DV_duty and the difference of pump duty ratio Δpump_duty.

With the ignition switch being on and the internal-combustion engine 1 operating, when reducing agent injection is performed, the reducing agent injection valve 25 is drive-controlled with the injection valve duty ratio DV_duty larger than 0. Furthermore, since the pressure Pu in the second reducing agent passage 33 decreases in association with reducing agent injection, the pump duty ratio Pump_duty also varies so as to follow the injection valve duty ratio DV_duty in order to maintain the pressure Pu at the system pressure Ptgt.

Accordingly, in the period during which reducing agent injection is performed, the time integrations Σdv_duty, ΣΔpump_duty and Σ(dv_duty x Δpump_duty) increase. On the other hand, in the period during which reducing agent injection is not performed, the time integrations Σdv_duty, ΣΔpump_duty and Σ(dv_duty x Δpump_duty) do not increase.

Then, when a predetermined period elapses, it is determined whether or not the time integration Σ(dv_duty x Δpump_duty) of the product of the injection valve duty ratio DV_duty in the period and the difference of pump duty ratio Δpump_duty is within a range assumed based on the time integration Σdv_duty of the injection valve duty ratio DV_duty in the period, which allows the diagnosis whether or not an abnormality has occurred in the reducing agent supply apparatus 20.

Specifically, when the injection amount of the reducing agent supply apparatus 20 is excessive, the pump duty ratio Pump_duty during the injection period is larger (broken line) than the pump duty ratio Pump_duty in normal state (solid line) . On the other hand, when the injection amount of the reducing agent supply apparatus 20 is insufficient, the pump duty ratio Pump_duty during the injection period is smaller (alternate long and short dash line) than the pump duty ratio Pump_duty in normal state (solid line).

Due to this, when an abnormality has occurred to cause the excessive injection amount condition of the reducing agent supply apparatus 20, the time integration Σ(dv_duty x Δpump_duty) of the product of the injection valve duty ratio DV_duty and the difference of pump duty ratio Δpump_duty is, as shown by the broken line, larger than that in normal state (solid line). On the other hand, when an abnormality has occurred to cause the insufficient injection amount condition of the reducing agent supply apparatus 20, the time integration Σ (dv_duty x Δpump_duty) of the product of the injection valve duty ratio DV_duty and the difference of pump duty ratio Δpump_duty is, as shown by the alternate long and short dash line, smaller than that in normal state (solid line).

Thus, it can be determined whether or not an abnormality has occurred in the reducing agent supply apparatus 20, by setting an upper threshold Thre_max for determining the excessive injection amount condition and a lower threshold Thre_min for determining the insufficient injection amount condition, then comparing the time integration Σ(dv_duty x Δpump_duty) after the predetermined period elapses with each of the thresholds. The thresholds Thre_max and Thre_min can be set considering temperature of reducing agent, tolerance and the like.

In the example shown in Fig. 4, the determination is performed using the time integration Σ(dv_duty x Δpump_duty) over the period from when the time integration of the injection valve duty ratio DV_duty is started to when this time integration Σdv_duty reaches a determination start value Σdv_duty_thre. This causes the variation in the time integration Σ(dv_duty x Δpump_duty) depending on whether or not an abnormality has occurred in the reducing agent supply apparatus 20 to be seen clearly.

The determination can also be performed using the time integration ΣΔpump_duty of the difference of pump duty ratio Δpump_duty, but, in the example shown in Fig. 4, the time integration Σ(dv_duty x Δpump_duty) of the product of the injection valve duty ratio DV_duty and the difference of pump duty ratio Δpump_duty is used for the determination. As a result, the variation depending on whether or not an abnormality has occurred in the reducing agent supply apparatus 20 can be seen more clearly, which facilitates the setting of the upper threshold Thre_max and lower threshold Thre_min.

### (6-3) Specific example of abnormality diagnosis flowchart

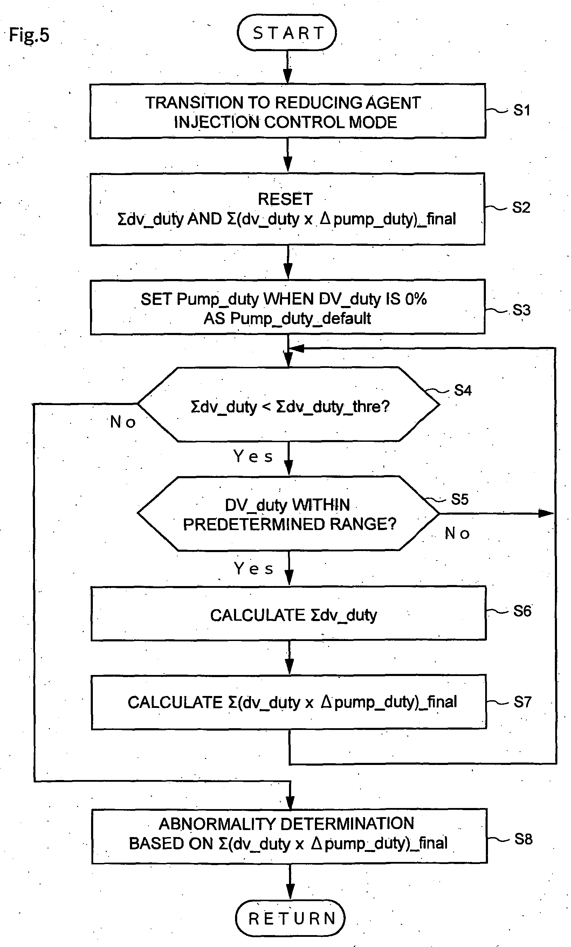

Next, one example of flowchart in which the abnormality diagnosis method shown in Fig. 4 is implemented by the control processing unit 40 is described with reference to Figs. 5-7.

First, the control processing unit 40, in step S1 of Fig. 5, starts injection control of reducing agent, then, in step S2, resets the currently stored time integration Σdv_duty, Σ (dv_duty x Δpump_duty)_final. Next, in step S3, the control processing unit 40 reads the pump duty ratio Pump_duty when the injection valve duty ratio DV_duty is 0% and sets it as the reference duty ratio Pump_duty_default.

Next, in step S4, the control processing unit 40 determines whether or not the time integration Δdv_duty of the injection valve duty ratio DV_duty is less than the determination start value Σdv_duty_thre. If YES in step S4, it is determined that the precise abnormality determination is not ready, so the process does not proceed to step S8 for performing abnormality determination, but proceeds to step S5.

In step S5, the control processing unit 40 determines whether or not the injection valve duty ratio DV_duty is within a predetermined range over which the integration is to be performed. This range may be simply set to be equal to or more than 0%. However, for example, the lower limit of the injection valve duty ratio DV_duty may also be set to be larger than 0% so that the integration is performed only when reducing agent is injected with a flow rate equal to or larger than a predetermined flow rate. Or a range of the injection valve duty ratio DV_duty in which the ratio of the variation in the pump duty ratio Pump_duty to the variation in the injection valve duty ratio DV_duty is constant may be previously determined so that the integration is performed only when the injection valve duty ratio DV_duty is within the range. This way of setting the range of the injection valve duty ratio DV_duty over which the integration is to be performed can improve the precision of the diagnosis.

If NO in step S5, it is determined that both the injection valve duty ratio DV_duty and the pump duty ratio Pump_duty are not varying. Then, since the integration step is not needed, the process returns to step S4 with no particular action. On the other hand, if YES in step S5, the control processing unit 40, in step S6, calculates the time integration Σdv_duty of the injection valve duty ratio DV_duty, then in step S7, calculates the time integration Σ (dv_duty x Δpump_duty)_final of the product of the injection valve duty ratio DV_duty and the difference of pump duty ratio Δpump_duty.

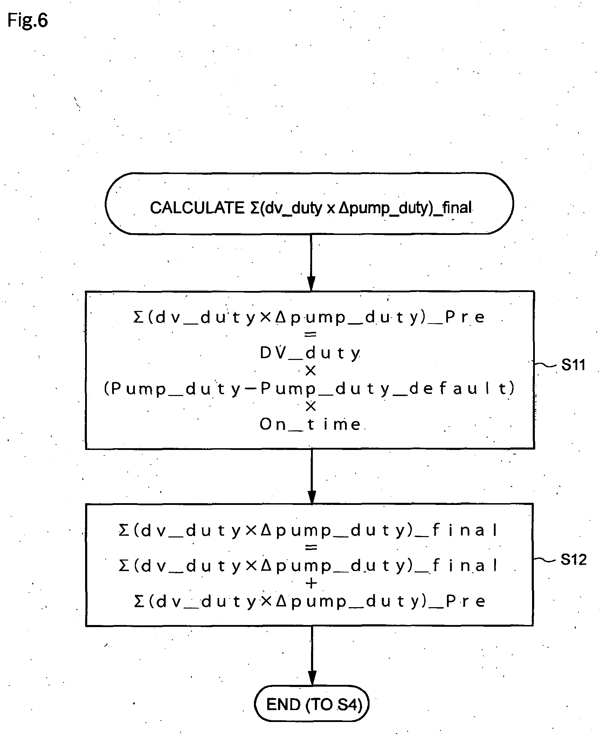

Fig. 6 is a flowchart specifically showing the process of calculating the time integration Σ(dv_duty x Δpump_duty)_final.

In this example, in step S11, the control processing unit 40 multiplies the injection valve duty ratio DV_duty by the difference of pump duty ratio Pump_duty - Pump_duty_default and by the time On_time during which the injection is performed of the period from the previous integration to the current integration to determine the time integration Σ(dv_duty x Δpump_duty)_Pre to be added this time.

After the time integration Σ(dv_duty x Δpump_duty)_Pre is determined, the control processing unit 40, in step S12, adds the current time integration Σ(dv_duty x Δpump_duty)_Pre determined in step S11 to the currently stored time integration Σ(dv_duty x Δpump_duty)_final, thereby determining the current time integration Σ (dv_duty x Δpump_duty)_final, then updates the stored value.

Returning to Fig. 5, when the time integration Σ(dv_duty x Δpump_duty) is calculated in step S7, the process returns to step S4 again to repeat the previous steps. Then, when the time integration Σdv_duty of the injection valve duty ratio DV_duty reaches the determination start value Σdv_duty_thre, it is determined to be NO in step S4 and the process proceeds to step S8. In step S8, the control processing unit 40 performs abnormality determination based on the time integration Σ(dv_duty x Δpump_duty)_final.

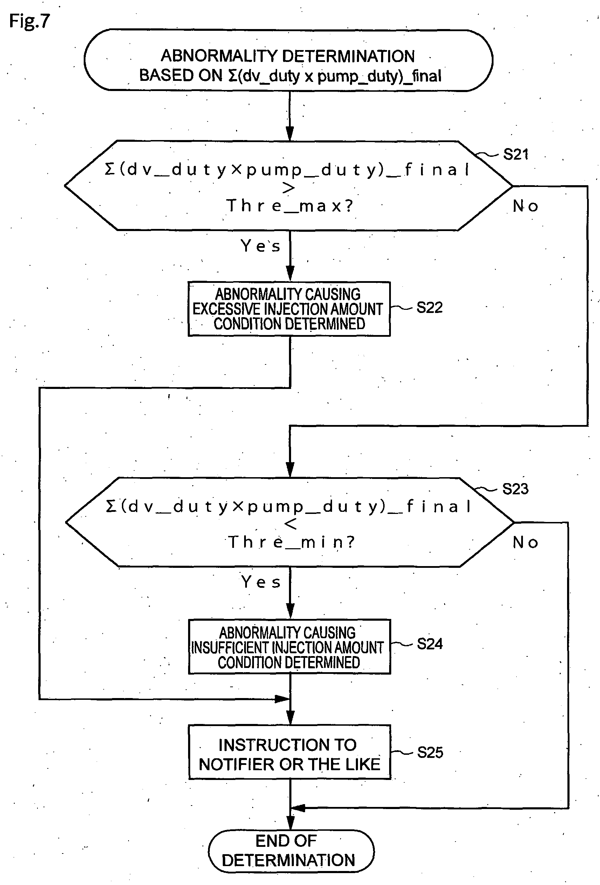

Fig. 7 is a flowchart specifically showing the process of abnormality determination performed in step S8.

In this example, first, in step S21, the control processing unit 40 determines whether or not the time integration Σ(dv_duty x Δpump_duty)_final exceeds the upper threshold Thre_max. If YES in step S21, the control processing unit 40 determines in step S22 that an abnormality causing the excessive injection amount condition has occurred in the reducing agent supply apparatus 20, then proceeds to step S25.

On the other hand, if NO in step S21, the process proceeds to step S23 in which the control processing unit 40 determines whether or not the time integration Σ(dv_duty x Δpump_duty)_final is below the lower threshold Thre_min. If YES in step S23, the control processing unit 40 determines in step S24 that an abnormality causing the insufficient injection amount condition has occurred in the reducing agent supply apparatus 20, then proceeds to step S25. On the other hand, if NO in step S23, it is determined that no abnormality has occurred in the reducing agent supply apparatus 20, so the abnormality determination process ends with no particular action.

When it is determined in step S22 that an abnormality causing the excessive injection amount condition has occurred or when it is determined in step S24 that an abnormality causing the insufficient injection amount condition has occurred, the control processing unit 40, in step S25, issues an instruction to a notifier or the like in order to notify an operator or the like of that abnormality. In response to this notification of the abnormality, the operation of the reducing agent supply apparatus 20 may be stopped or the internal-combustion engine 1 may be controlled to reduce output power.

According to the method for diagnosing an abnormality of the reducing agent supply apparatus 20 implemented by the control processing unit (abnormality diagnosis unit) 40 of the embodiment described above, abnormality diagnosis is performed based on the injection valve duty ratio DV_duty and the pump duty ratio Pump_duty, which enables abnormality diagnosis of the reducing agent supply apparatus 20 without changing any component other than the control processing unit 40 and without interrupting usual reducing agent injection control.

Especially, in the embodiment, abnormality determination is performed using the time integration of the product of the injection valve duty ratio DV_duty and the difference of pump duty ratio Δpump_duty, which causes the variation in the time integration depending on whether or not an abnormality has occurred to be seen clearly, thereby improving the precision of the diagnosis. Furthermore, the period over which the time integration is performed is a period in which the injection valve duty ratio DV_duty reaches a predetermined determination start value DV_duty_thre, which causes the variation in the time integration depending on whether or not an abnormality has occurred, to be seen reliably, thereby improving the precision of the diagnosis and increasing the frequency of the diagnosis.

### [Second embodiment]

Next, a reducing agent supply apparatus abnormality diagnosis unit in accordance with a second embodiment of the invention is described.

The reducing agent supply apparatus abnormality diagnosis unit of the embodiment is to be applied to the reducing agent supply apparatus 20 described in the first embodiment, and basically has a configuration similar to that of the control processing unit 40 of the first embodiment shown in Fig. 2. However, the abnormality determination method implemented by the abnormality determiner 49 is different from that of the abnormality diagnosis unit of the first embodiment.

In the embodiment, the abnormality determiner 49 is configured to determine whether or not an abnormality has occurred in the reducing agent supply apparatus 20 based on the ratio of the time integration Σdv_duty of the injection valve duty ratio to the time integration ΣΔpump_duty of the difference Δpump_duty between the pump duty ratio Pump_duty and the reference duty Pump_duty_default.

### 1. Specific example of abnormality diagnosis method

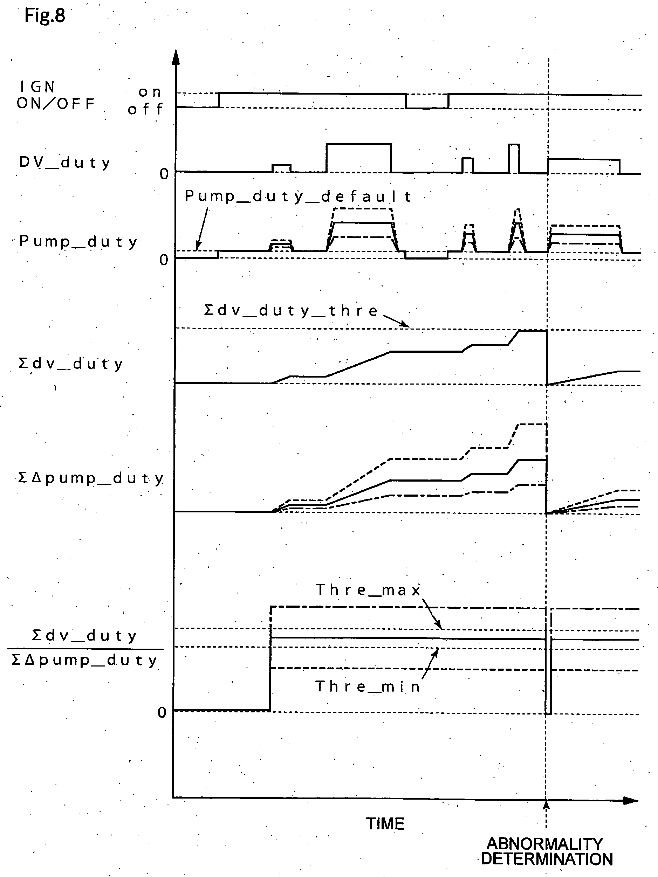

Fig. 8 shows the transition of the on/off of the ignition switch, the injection valve duty ratio DV_duty, the pump duty ratio Pump_duty, the time-integration Σdv_duty of the injection valve duty ratio, the time-integration ΣΔpump_duty of the difference of pump duty ratio, and the time-integration Σdv_duty of the injection valve duty ratio divided by the time-integration ΣΔpump_duty of the difference of pump duty ratio.

The changes in the pump duty ratio Pump_duty, the time integration Σdv_duty of the injection valve duty ratio and the time integration ΣΔpump_duty of the difference of pump duty ratio in association with the change in the injection valve duty ratio DV_duty is similar to that described with reference to Fig. 4.

Note that the flow rate of reducing agent discharged by the pump 23 varies in proportion to the flow rate of injected reducing agent, so the pump duty ratio Pump_duty and the injection valve duty ratio DV_duty would be almost in a proportional relationship. Accordingly, theoretically, when the reducing agent supply apparatus 20 is in normal state, the time integration Σdv_duty of the injection valve duty ratio divided by the time integration ΣΔpump_duty of the difference of pump duty ratio would remain almost constant. Thus, it can be diagnosed whether or not an abnormality has occurred in the reducing agent supply apparatus 20, by determining whether or not the time integration Σdv_duty of the injection valve duty ratio divided by the time integration ΣΔpump_duty of the difference of pump duty ratio is within a predetermined range during a predetermined period.

Specifically, when the injection amount of the reducing agent supply apparatus 20 is excessive, the pump duty ratio Pump_duty during the injection period is larger (broken line) than the pump duty ratio Pump_duty in normal state (solid line) . On the other hand, when the injection amount of the reducing agent supply apparatus 20 is insufficient, the pump duty ratio Pump_duty during the injection period is smaller (alternate long and short dash line) than the pump duty ratio Pump_duty in normal state (solid line).

Due to this, when an abnormality has occurred to cause the excessive injection amount condition of the reducing agent supply apparatus 20, the time integration Σdv_duty of the injection valve duty ratio divided by the time integration ΣΔpump_duty of the difference of pump duty ratio is, as shown by the broken line, smaller than that in normal state (solid line). On the other hand, when an abnormality has occurred to cause the insufficient injection amount condition of the reducing agent supply apparatus 20, the time integration Σdv_duty of the injection valve duty ratio divided by the time integration ΣΔpump_duty of the difference of pump duty ratio is, as shown by the alternate long and short dash line, larger than that in normal state (solid line).

Thus, it can be determined whether or not an abnormality has occurred in the reducing agent supply apparatus 20, by setting an upper threshold Thre_max for determining the insufficient injection amount condition and a lower threshold Thre_min for determining the excessive injection amount condition, then comparing the time integration Δdv_duty of the injection valve duty ratio divided by the time integration ΣΔpump_duty of the difference of pump duty ratio after the predetermined period elapses with each of the thresholds. The thresholds Thre_max and Thre_min can also be set considering temperature of reducing agent, tolerance and the like.

In the example shown in Fig. 8, the determination is performed using the time integrations Σdv_duty, ΣΔpump_duty over the period from when the time integration of the injection valve duty ratio DV_duty is started to when this time integration Δdv_duty reaches a determination start value Σdv_duty_thre. Thus, even when the change in the pump duty ratio Pump_duty temporarily shifts with respect to the change in the injection valve duty ratio DV_duty, the impact of this shift on the abnormality determination is small.

### 2. Specific example of abnormality diagnosis flowchart

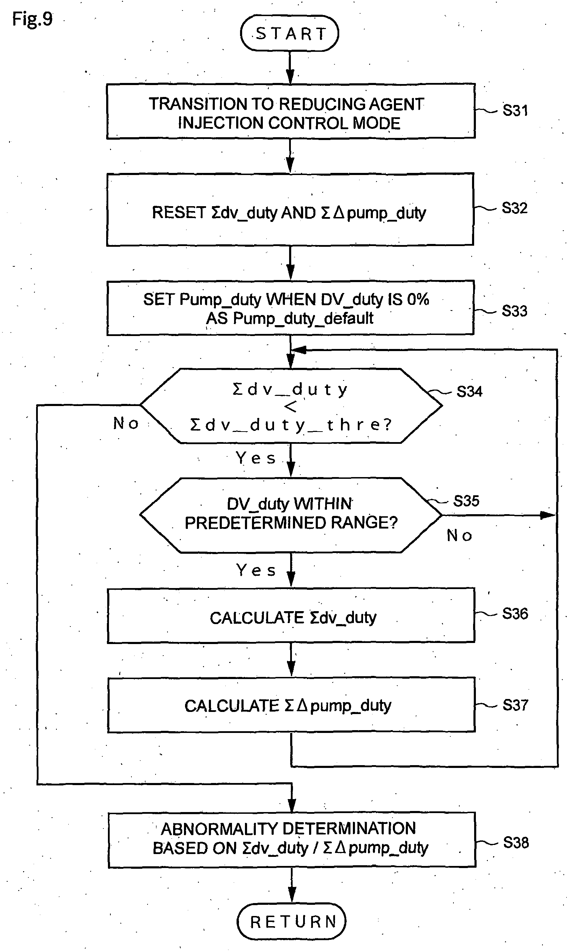

Next, one example of flowchart in which the abnormality diagnosis method shown in Fig. 8 is implemented by the control processing unit 40 is described with reference to Figs. 9-10.

First, the control processing unit 40, in step S31 of Fig. 9, starts injection control of reducing agent, then, in step S32, resets the currently stored time integrations Σdv_duty, ΣΔpump_duty. Next, in step S33, the control processing unit 40 reads the pump duty ratio Pump_duty when the injection valve duty ratio DV_duty is 0% and sets it as the reference duty ratio Pump_duty_default.

Next, in step S34, the control processing unit 40 determines whether or not the time integration Σdv_duty of the injection valve duty ratio DV_duty is less than the determination start value Σdv_duty_thre. If YES in step S34, it is determined that the precise abnormality determination is not ready, so the process does not proceed to step S38 for performing abnormality determination, but proceeds to step S35.

In step S35, the control processing unit 40 determines whether or not the injection valve duty ratio DV_duty is within a predetermined range over which the integration is to be performed. Similarly to the first embodiment, this range may be simply set to be equal to or more than 0%. However, for example, the lower limit of the injection valve duty ratio DV_duty may also be set to be larger than 0% so that the integration is performed only when reducing agent is injected with a flow rate equal to or larger than a predetermined flow rate. Or a range of the injection valve duty ratio DV_duty in which the ratio of the variation in the pump duty ratio Pump_duty to the variation in the injection valve duty ratio DV_duty is constant may be previously determined so that the integration is performed only when the injection valve duty ratio DV_duty is within the range. This way of setting the range of the injection valve duty ratio DV_duty over which the integration is to be performed can improve the precision of the diagnosis.

If NO in step S35, it is determined that both the injection valve duty ratio DV_duty and the pump duty ratio Pump_duty are not varying. Then, since the integration step is not needed, the process returns to step S34 with no particular action. On the other hand, if YES in step S35, the control processing unit 40, in step S36, calculates the time integration Σdv_duty of the injection valve duty ratio DV_duty, then in step S37, calculates the time integration ΣΔpump_duty of the difference of pump duty ratio Δpump_duty.

When the time integrations Σdv_duty, ΣΔpump_duty are calculated in step S36 and step S37, the process returns to step S34 again to repeat the previous steps. Then, when the time integration Σdv_duty of the injection valve duty ratio DV_duty reaches the determination start value Σdv_duty_thre, it is determined to be NO in step S34 and the process proceeds to step S38. In step S38, the control processing unit 40 performs abnormality determination based on the time integration Σdv_duty of the injection valve duty ratio divided by the time integration ΣΔpump_duty of the difference of pump duty ratio.

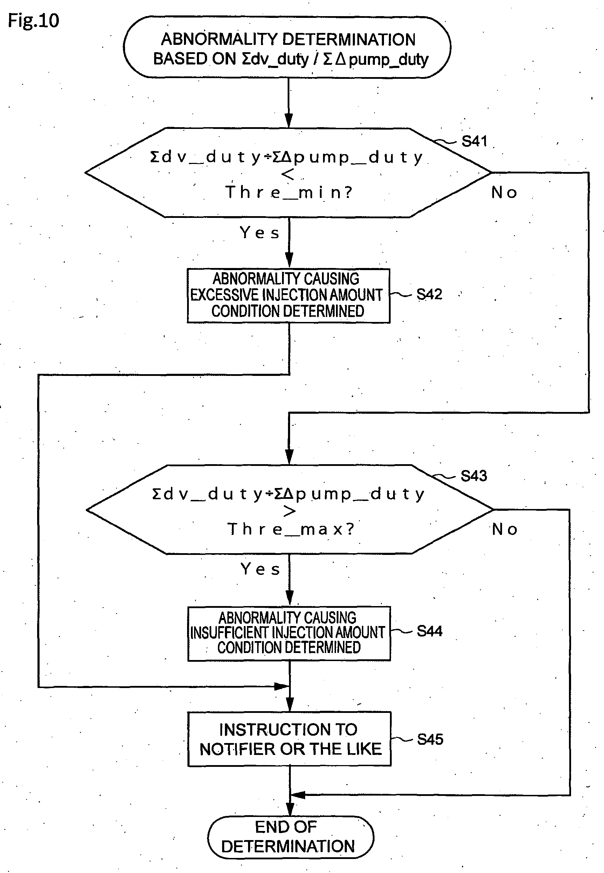

Fig. 10 is a flowchart specifically showing the process of abnormality determination performed in step S38.

In this example, first, in step S41, the control processing unit 40 determines whether or not the time integration Δdv_duty of the injection valve duty ratio divided by the time integration ΣΔpump_duty of the difference of pump duty ratio is below the lower threshold Thre_min. If YES in step S41, the control processing unit 40 determines in step S42 that an abnormality causing the insufficient injection amount condition has occurred in the reducing agent supply apparatus 20, then proceeds to step S45.

On the other hand, if NO in step S41, the control processing unit 40 determines in step S43 whether or not the time integration Δdv_duty of the injection valve duty ratio divided by the time integration ΣΔpump_duty of the difference of pump duty ratio exceeds the upper threshold Thre_max. If YES in step S43, the control processing unit 40 determines in step S44 that an abnormality causing the excessive injection amount condition has occurred in the reducing agent supply apparatus 20, then proceeds to step S45. On the other hand, if NO in step S43, it is determined that no abnormality has occurred in the reducing agent supply apparatus 20, so the abnormality determination process ends with no particular action.

When it is determined in step S42 that an abnormality causing the insufficient injection amount condition has occurred or when it is determined in step S44 that an abnormality causing the excessive injection amount condition has occurred, the control processing unit 40, in step S45, issues an instruction to a notifier or the like in order to notify an operator or the like of that abnormality. In response to this notification of the abnormality, the operation of the reducing agent supply apparatus 20 may be stopped or the internal-combustion engine 1 may be controlled to reduce output power.

According to the method for diagnosing an abnormality of the reducing agent supply apparatus 20 implemented by the control processing unit (abnormality diagnosis unit) 40 of the embodiment described above, abnormality diagnosis is performed based on the injection valve duty ratio DV_duty and the pump duty ratio Pump_duty, which enables abnormality diagnosis of the reducing agent supply apparatus 20 without changing any component other than the control processing unit 40 and without interrupting usual reducing agent injection control.

Especially, in the embodiment, abnormality determination is performed using the time integration Σdv_duty of the injection valve duty ratio divided by the time integration ΣΔpump_duty of the difference of pump duty ratio, so even when the change in the pump duty ratio Pump_duty temporarily shifts with respect to the change in the injection valve duty ratio DV_duty, the impact of this shift on the abnormality determination is small, which improves the precision of the diagnosis.

### [Other embodiment]

The embodiments described above may also be modified and implemented as follows.

For example, the period over which the time integration is performed in order to obtain data for abnormality determination is not limited to a period in which the injection valve duty ratio DV_duty reaches the determination start value DV_duty_thre, but may be set so that abnormality determination is performed each time an amount of time elapses in which absolutely a predetermined amount or more of reducing agent is injected. However, in order to set that period as above in performing the abnormality determination of the first embodiment, map information or the like needs to be previously stored so that a determination threshold is selected depending on the time integration Σdv_duty of the injection valve duty ratio DV_duty when that period elapses.

Furthermore, in performing the abnormality diagnosis of the first embodiment, by setting the period so that the time integration Σpump_duty is relatively large, even when abnormality diagnosis is performed by comparing the time integration Σpump_duty of the pump duty ratio Pump_duty with a determination threshold, precise abnormality diagnosis can be performed.

Furthermore, in performing the abnormality determination of the second embodiment, in the above-described embodiment, the time integration Σdv_duty of the injection valve duty ratio divided by the time integration ΣΔpump_duty of the difference of pump duty ratio is compared with a determination threshold, but the time integration ΣΔpump_duty of the difference of pump duty ratio divided by the time integration Δdv_duty of the injection valve duty ratio may also be compared with a determination threshold. In this case, contrary to the above-described embodiment, when the time integration ΣΔpump_duty of the difference of pump duty ratio divided by the time integration Σdv_duty of the injection valve duty ratio exceeds the upper threshold Thre_max, it is determined that an abnormality causing the excessive injection amount condition has occurred, and when being below the lower threshold Thre_min, it is determined that an abnormality causing the insufficient injection amount condition has occurred.

## Claims

1. A reducing agent supply apparatus abnormality diagnosis unit (40) for performing abnormality diagnosis of a reducing agent supply apparatus (20), the reducing agent supply apparatus comprising: a storage tank (21) for storing liquid reducing agent; a pump (23) for pumping the reducing agent; a reducing agent injection valve (25) for injecting the reducing agent pumped by the pump in an exhaust pipe of an internal-combustion engine (1); a reducing agent passage (33) connecting the pump (23) to the reducing agent injection valve (25); and a pressure sensor (27) for detecting pressure in the reducing agent passage (33), wherein the reducing agent supply apparatus abnormality diagnosis unit (40) comprises:
a reducing agent injection valve controller (43) for determining an energization on/off duty ratio according to an instructed injection amount of the reducing agent to issue an instruction for driving the reducing agent injection valve;
a pump controller (47) for determining an energization on/off duty ratio to issue an instruction for driving the pump so that the pressure in the reducing agent passage (33) is maintained at a predetermined system pressure, based on the difference between the detected pressure in the reducing agent passage (33) and the system pressure; and **characterized by**
an abnormality determiner (49) for performing abnormality determination of the reducing agent supply apparatus (20) based on the duty ratio of the reducing agent injection valve (25) and the duty ratio of the pump (23) in a predetermined period.

2. The reducing agent supply apparatus abnormality diagnosis unit (40) according to claim 1, wherein the abnormality determiner (49) performs the abnormality determination by determining whether or not the instruction for driving the pump (23) with an output power assumed from the integration of the reducing agent injection valve duty ratio during the predetermined period has been issued.

3. The reducing agent supply apparatus abnormality diagnosis unit (40) according to claim 1 or 2, wherein the abnormality determiner (49) performs the abnormality determination based on the reducing agent injection valve duty ratio and the pump duty ratio when the reducing agent injection valve duty ratio is within a range in which the change in the pump duty ratio is in proportion to the change in the reducing agent injection valve duty ratio.

4. The reducing agent supply apparatus abnormality diagnosis unit (40) according to any one of claims 1 to 3, wherein the abnormality determiner (49) performs the abnormality determination such that the predetermined period is a period from when the integration of the reducing agent injection valve duty ratio is started to when the calculated integration reaches a predetermined determination start value.

5. The reducing agent supply apparatus abnormality diagnosis unit (40) according to any one of claims 1 to 4, wherein the abnormality determiner (49) performs the abnormality determination by setting as a reference duty ratio the pump duty ratio when the reducing agent injection valve duty ratio is zero, then comparing the ratio of the integration of the reducing agent injection valve duty ratio during the predetermined period to the integration of the difference between the pump duty ratio and the reference duty ratio during the predetermined period, with a determination threshold.

6. The reducing agent supply apparatus abnormality diagnosis unit (40) according to any one of claims 1 to 4, wherein the abnormality determiner (49) performs the abnormality determination by setting as a reference duty ratio the pump duty ratio when the reducing agent injection valve duty ratio is zero, then comparing the integration of the product of the reducing agent injection valve duty ratio and the difference between the pump duty ratio and the reference duty ratio during the predetermined period, with a determination threshold assumed from the integration of the reducing agent injection valve duty ratio during the predetermined period.

7. The reducing agent supply apparatus abnormality diagnosis unit (40) according to any one of claims 1 to 4, wherein the abnormality determiner (49) performs the abnormality determination by setting as a reference duty ratio the pump duty ratio when the reducing agent injection valve duty ratio is zero, then comparing the integration of the difference between the pump duty ratio and the reference duty ratio during the predetermined period, with a determination threshold assumed from the integration of the reducing agent injection valve duty ratio during the predetermined period.

8. The reducing agent supply apparatus abnormality diagnosis unit (40) according to any one of claims 1 to 7, wherein an upper threshold and a lower threshold are set as a determination threshold, and the abnormality determiner (49) uses the upper threshold and the lower threshold to separately determine an abnormality of excessive injection amount condition and an abnormality of insufficient injection amount condition.

9. A reducing agent supply apparatus (20) comprising the reducing agent supply apparatus abnormality diagnosis unit (40) according to any one of claims 1 to 8.

## Patentansprüche

1. Fehlerdiagnoseeinheit (40) für eine Reduktionsmittelversorgungsvorrichtung zum Durchführen einer Fehlerdiagnose einer Reduktionsmittelversorgungsvorrichtung (20), wobei die Reduktionsmittelversorgungsvorrichtung Folgendes umfasst:
einen Speicherbehälter (21) zum Speichern eines flüssigen Reduktionsmittels; eine Pumpe (23) zum Pumpen des Reduktionsmittels; ein Reduktionsmittel-Einspritzventil (25) zum Einspritzen des Reduktionsmittels, das von der Pumpe gepumpt wird, in ein Abgasrohr einer Brennkraftmaschine (1); einen Reduktionsmittelkanal (33), der die Pumpe (23) mit dem Reduktionsmittel-Einspritzventil (25) verbindet; und einen Drucksensor (27) zum Detektieren von Druck in dem Reduktionsmittelkanal (33), wobei die Fehlerdiagnoseeinheit (40) für eine Reduktionsmittelversorgungsvorrichtung Folgendes umfasst:
eine Reduktionsmittel-Einspritzventilsteuerung (43) zum Bestimmen eines Erregungs-Ein/Aus-Tastgrads entsprechend einer angewiesenen Einspritzmenge des Reduktionsmittels, um eine Anweisung zum Ansteuern des Reduktionsmittel-Einspritzventils zu erteilen;
eine Pumpensteuerung (47), um basierend auf der Differenz zwischen dem in dem Reduktionsmittelkanal (33) detektierten Druck und dem Systemdruck einen Erregungs-Ein/Aus-Tastgrad zu bestimmen, um eine Anweisung zum Ansteuern der Pumpe derart zu erteilen, dass der Druck in dem Reduktionsmittelkanal (33) bei einem vorgegebenen Systemdruck aufrechterhalten wird; und **gekennzeichnet durch**
eine Fehlerbestimmungseinrichtung (49), um basierend auf dem Tastgrad des Reduktionsmittel-Einspritzventils (25) und dem Tastgrad der Pumpe (23) in einem vorgegebenen Zeitraum eine Bestimmung des Fehlers der Reduktionsmittelversorgungsvorrichtung (20) durchzuführen.

2. Fehlerdiagnoseeinheit (40) für eine Reduktionsmittelversorgungsvorrichtung nach Anspruch 1, wobei die Fehlerbestimmungseinrichtung (49) die Fehlerbestimmung durchführt, indem sie bestimmt, ob die Anweisung zum Ansteuern der Pumpe (23) mit einer Ausgangsleistung, die aus der Integration des Tastgrads des Reduktionsmittel-Einspritzventils in der vorgegebenen Zeitdauer angenommen wird, erteilt wird oder nicht.

3. Fehlerdiagnoseeinheit (40) für eine Reduktionsmittelversorgungsvorrichtung nach Anspruch 1 oder 2, wobei die Fehlerbestimmungseinrichtung (49) die Fehlerbestimmung basierend auf dem Tastgrad des Reduktionsmittel-Einspritzventils und dem Tastgrad der Pumpe durchführt, wenn der Tastgrad des Reduktionsmittel-Einspritzventils in einem Bereich liegt, in dem die Änderung des Tastgrads der Pumpe proportional zu der Änderung des Tastgrads des Reduktionsmittel-Einspritzventils ist.

4. Fehlerdiagnoseeinheit (40) für eine Reduktionsmittelversorgungsvorrichtung nach einem der Ansprüche 1 bis 3, wobei die Fehlerbestimmungseinrichtung (49) die Fehlerbestimmung derart durchführt, dass die vorgegebene Zeitdauer einer Zeitdauer von dem Zeitpunkt, an dem die Integration des Tastgrads des Reduktionsmittel-Einspritzventils beginnt, bis zu dem Zeitpunkt, an dem die berechnete Integration einen vorgegebenen Bestimmungsstartwert erreicht, entspricht.

5. Fehlerdiagnoseeinheit (40) für eine Reduktionsmittelversorgungsvorrichtung nach einem der Ansprüche 1 bis 4, wobei die Fehlerbestimmungseinrichtung (49) die Fehlerbestimmung durchführt, indem sie den Pumpentastgrad als Referenztastgrad einstellt, wenn der Tastgrad des Reduktionsmittel-Einspritzventils null ist, wobei sie anschließend das Verhältnis der Integration des Tastgrads des Reduktionsmittel-Einspritzventils in dem vorgegebenen Zeitraum zu der Integration der Differenz zwischen dem Pumpentastgrad und Referenztastgrad in dem vorgegebenen Zeitraum mit einem Bestimmungsschwellwert vergleicht.

6. Fehlerdiagnoseeinheit (40) für eine Reduktionsmittelversorgungsvorrichtung nach einem der Ansprüche 1 bis 4, wobei die Fehlerbestimmungseinrichtung (49) die Fehlerbestimmung durchführt, indem sie den Pumpentastgrad als Referenztastgrad einstellt, wenn der Tastgrad des Reduktionsmittel-Einspritzventils null ist, wobei sie anschließend die Integration des Produkts des Tastgrads des Reduktionsmittel-Einspritzventils und der Differenz zwischen dem Pumpentastgrad und dem Referenztastgrad in dem vorgegebenen Zeitraum mit einem Bestimmungsschwellwert vergleicht, der aus der Integration des Tastgrads des Reduktionsmittel-Einspritzventils in dem vorgegebenen Zeitraum angenommen wird.

7. Fehlerdiagnoseeinheit (40) für eine Reduktionsmittelversorgungsvorrichtung nach einem der Ansprüche 1 bis 4, wobei die Fehlerbestimmungseinrichtung (49) die Fehlerbestimmung durchführt, indem sie den Pumpentastgrad als Referenztastgrad einstellt, wenn der Tastgrad des Reduktionsmittel-Einspritzventils null ist, wobei sie anschließend die Integration der Differenz zwischen dem Pumpentastgrad und dem Referenztastgrad in dem vorgegebenen Zeitraum mit einem Bestimmungsschwellwert vergleicht, der aus der Integration des Tastgrads des Reduktionsmittel-Einspritzventils in dem vorgegebenen Zeitraum angenommen wird.

8. Fehlerdiagnoseeinheit (40) für eine Reduktionsmittelversorgungsvorrichtung nach einem der Ansprüche 1 bis 7, wobei ein oberer Schwellwert und ein unterer Schwellwert als ein Bestimmungsschwellwert eingestellt werden und die Fehlerbestimmungseinrichtung (49) den oberen Schwellwert und den unteren Schwellwert verwendet, um einzeln einen Fehler eines Zustands einer übermäßigen Einspritzmenge und einen Fehler eines Zustands einer nicht ausreichenden Einspritzmenge zu bestimmen.

9. Reduktionsmittelversorgungsvorrichtung (20), die die Fehlerdiagnoseeinheit (40) für eine Reduktionsmittelversorgungsvorrichtung nach einem der Ansprüche 1 bis 8 umfasst.

## Revendications

1. Unité de diagnostic (40) de défaut d'un appareil d'alimentation en un agent réducteur (20), comprenant : un réservoir de stockage (21) d'un agent réducteur liquide, une pompe (23) pour pomper l'agent réducteur, une soupape d'injection de l'agent réducteur (25) pour injecter l'agent réducteur pompé par la pompe dans une tubulure d'échappement d'un moteur à combustion interne (1), une conduite de passage de l'agent réducteur (33) reliant la pompe (23) à la soupape d'injection de l'agent réducteur (25) et un détecteur de pression (27) pour détecter la pression dans la conduite de passage de l'agent réducteur (33), l'unité de diagnostic de défaut de l'appareil d'alimentation en agent réducteur (40) comprenant :
un régulateur de soupape d'injection de l'agent réducteur (43) pour déterminer un rapport cyclique on/off de mise sous tension en fonction d'une quantité injectée demandée de l'agent réducteur pour délivrer une instruction de commande de la soupape d'injection de l'agent réducteur,
un régulateur de pompe (47) pour déterminer un rapport cyclique on/off de mise sous tension pour délivrer une instruction de commande de la pompe de sorte que la pression dans la conduite de passage de l'agent réducteur (33) soit maintenue à une pression systémique prédéfinie, basée sur la différence entre la pression détectée dans la conduite de passage de l'agent réducteur (33) et la pression systémique, et
**caractérisée par**
un système de détermination de défaut (49) pour effectuer une détermination de défaut de l'appareil d'alimentation en agent réducteur (20) à partir du rapport cyclique de la soupape d'injection d'agent réducteur (25) et du rapport cyclique de la pompe (23) pendant une période prédéfinie.

2. Unité de diagnostic de défaut d'un appareil d'alimentation en agent réducteur (40), conforme à la revendication 1, selon laquelle le système de détermination de défaut (49) effectue la détermination de défaut en déterminant si l'instruction de commande de la pompe (23) avec une puissance de sortie supposée à partir de l'intégration du rapport cyclique de la soupape d'injection d'agent réducteur au cours de la période prédéfinie a été délivrée ou si tel n'est pas le cas.

3. Unité de diagnostic de défaut d'un appareil d'alimentation en agent réducteur (40), conforme à la revendication 1 ou 2, selon laquelle le système de détermination de défaut (49) effectue la détermination de défaut à partir du rapport cyclique de la soupape d'injection d'agent réducteur et du rapport cyclique de la pompe lorsque le rapport cyclique de la soupape d'injection d'agent réducteur est située dans une plage dans laquelle la modification du rapport cyclique de la pompe est proportionnelle à la modification du rapport cyclique de la soupape d'injection d'agent réducteur.

4. Unité de diagnostic de défaut d'un appareil d'alimentation en agent réducteur (40), conforme à l'une quelconque des revendications 1 à 3, selon laquelle le système de détermination de défaut (49) effectue la détermination de défaut de sorte que la période prédéfinie soit la période allant du début de l'intégration du rapport cyclique de la soupape d'injection d'agent réducteur à l'atteinte par l'intégration calculée d'une valeur de départ de détermination prédéfinie.

5. Unité de diagnostic de défaut d'un appareil d'alimentation en agent réducteur (40), conforme à l'une quelconque des revendications 1 à 4, selon laquelle le système de détermination de défaut (49) effectue la détermination de défaut en fixant en tant que rapport cyclique de référence le rapport cyclique de la pompe lorsque le rapport cyclique de la soupape d'injection d'agent réducteur est égal à zéro puis en comparant le rapport de l'intégration du rapport cyclique de la soupape d'injection d'agent réducteur pendant la période prédéfinie à l'intégration de la différence entre le rapport cyclique de la pompe et le rapport cyclique de référence au cours de la période prédéfinie avec un seuil de détermination.

6. Unité de diagnostic de défaut d'un appareil d'alimentation en agent réducteur (40), conforme à l'une quelconque des revendications 1 à 4, dans laquelle le système de détermination de défaut (49) effectue la détermination de défaut en fixant en tant que rapport cyclique de référence, le rapport cyclique de la pompe lorsque le rapport cyclique de la soupape d'injection d'agent réducteur est égal à zéro puis en comparant l'intégration du produit du rapport cyclique de la soupape d'injection d'agent réducteur et la différence entre le rapport cyclique de la pompe et le rapport cyclique de référence au cours de la période prédéfinie avec un seuil de détermination supposé à partir de l'intégration du rapport cyclique de la soupape d'injection d'agent réducteur pendant la période prédéfinie.

7. Unité de diagnostic de défaut d'un appareil d'alimentation en un agent réducteur (40), conforme à l'une quelconque des revendications 1 à 4, dans laquelle le système de détermination de défaut (49) effectue la détermination de défaut en fixant en tant que rapport cyclique de référence, le rapport cyclique de la pompe lorsque le rapport cyclique de la soupape d'injection de l'agent réducteur est égal à zéro, puis en comparant l'intégration de la différence entre le rapport cyclique de la pompe et le rapport cyclique de référence au cours de la période prédéfinie avec un seuil de détermination supposé à partir de l'intégration du rapport cyclique de la soupape d'injection d'agent réducteur au cours de la période prédéfinie.

8. Unité de diagnostic de défaut d'un appareil d'alimentation en agent réducteur (40), conforme à l'une quelconque des revendications 1 à 7, dans laquelle un seuil supérieur et un seuil inférieur sont fixés en tant que seuil de détermination, et le système de détermination de défaut (49) utilise le seuil supérieur et le seuil inférieur pour déterminer séparément un défaut de condition de quantité injectée excessive ou un défaut de quantité injectée insuffisante.

9. Appareil d'alimentation en un agent réducteur (20) comprenant une unité de diagnostic de défaut de l'appareil d'alimentation en agent réducteur (40) conforme à l'une quelconque des revendications 1 à 8.
